# EUROPÄISCHE PATENTSCHRIFT

(11) **EP 3 325 924 B1**
(45) Veröffentlichungstag und Bekanntmachung des Hinweises auf die Patenterteilung: **16.09.2020**
(21) Anmeldenummer: 16731148.9
(22) Anmeldetag: 22.06.2016
(51) Int. Cl.: G01F 1/58, G01F 15/00, B22F 3/105, B22F 5/00, B22F 7/08, C22C 1/04

(54) **MAGNETISCH-INDUKTIVES DURCHFLUSSMESSGERÄT ZUR MESSUNG DER DURCHFLUSSGESCHWINDIGKEIT ODER DES VOLUMENDURCHFLUSSES VON MEDIEN IN EINER ROHRLEITUNG**
MAGNETIC-INDUCTIVE FLOWMETER FOR MEASURING THE FLOW VELOCITY OR THE VOLUME FLOW OF MEDIA IN A PIPELINE
APPAREIL DE MESURE DE DÉBIT MAGNÉTO-INDUCTIF POUR LA MESURE DE LA VITESSE D'ÉCOULEMENT OU DU DÉBIT VOLUMÉTRIQUE DE SUBSTANCES DANS UNE CONDUITE

(30) Priorität: 23.07.2015 DE 102015112018
(43) Veröffentlichungstag der Anmeldung: 30.05.2018
(73) Patentinhaber: Endress+Hauser Flowtec AG, 4153 Reinach (CH)
(72) Erfinder: VOIGT, Frank, 79576 Weil am Rhein (DE); KOUDAL, Ole, 5452 Oberrohrdorf (CH); KOWALSKI, Jörg, 79576 Weil am Rhein (DE)
(74) Vertreter: Andres, Angelika Maria
(86) Internationale Anmeldenummer: PCT/EP2016/064377
(87) Internationale Veröffentlichungsnummer: WO 2017/012813

(56) Entgegenhaltungen:
- DE-A1- 3 843 667
- DE-A1-102005 002 904
- DE-A1-102005 029 324
- US-A- 4 773 275

## Beschreibung

Die Erfindung betrifft ein Magnetisch-induktives Durchflussmessgerät umfassend eine Hybridelektrode sowie ein Verfahren zur Herstellung einer solchen Hybridelektrode.
Magnetisch-induktive Messgeräte setzen Elektroden ein, um die den Durchfluss eines Mediums durch ein angelegtes Magnetfeld die im Medium erzeugte elektrische Spannung abzugreifen. Da der Einsatzbereich von solchen Messgeräten auch schwierige Bedingungen mit beispielsweise korrosiven und/oder heißen Medien umfasst, werden an solche Elektroden hohe Ansprüche in Bezug auf deren Materialien gestellt. Elektroden nach dem Stand der Technik sind häufig aus einem Werkstück gefertigt wie zum Beispiel in den Schriften WO 2010/015534 A1 und WO 2009/071615 gezeigt. Bevorzugte Materialien zur Herstellung von Elektroden sind Edelmetalle wie Platin, Gold oder Tantal aufgrund ihrer guten Leitfähigkeit und Toleranz gegenüber schwierigen chemischen Randbedingungen. Aufgrund der hohen Materialpreise dieser Metalle sind Elektroden, welche aus einem der genannten Metalle hergestellt sehr teuer.

Die Schrift DE 102005002904 A1 lehrt eine Elektrode in einem Messrohr eines magnetisch-induktiven Durchflussmessers, welche einen Träger aufweist, welcher Träger auf einer einem Messrohrinneren zugewandten Seite eine Mehrlagenschicht aufweist.
Die DE 102005029324 A1 lehrt einen magnetisch-induktiven Durchflussmesser mit geteilten galvanischen Messelektroden, welche jeweils einen Kopfabschnitt aus korrosionsarmen Material und einen Schaftabschnitt aus unedlem Material aufweisen.
Die US 4773275 A beschreibt einen magnetischen Durchflussmesser mit einer zweigeteilten Messelektrode umfassend einen Elektrodenkopf und einen Elektrodenschaft.

Die DE 3843667 A1 lehrt ein Verfahren zur Herstellung einer Elektrode für elektromagnetische Durchflussmesser, wobei eine Platinpaste auf einen Elektrodenkern aufgetragen und anschließend gesintert wird.

**Aufgabe der vorliegenden Erfindung** ist es, eine Hybridelektrode bestehend aus zwei Teilen, einem Grundkörper aus einem günstigen Material und einem Elektrodenkopf aus einem für den Elektrodenkopf bevorzugten Material herzustellen, wobei der Elektrodenkopf zumindest teilweise stoffschlüssig mit dem Grundkörper verbunden ist. Auf diese Weise kann die Verwendung teurer Materialien auf die Herstellung des Elektrodenkopfs eingeschränkt werden. Die Aufgabe wird erfindungsgemäß gelöst durch eine Vorrichtung gemäß dem unabhängigen magnetisch-induktiven Durchflussmessgerät in Anspruch 1.

**Die erfindungsgemäße Vorrichtung** wird durch ein magnetisch-induktives Durchflussmessgerät umgesetzt, welches Durchflussmessgerät ein Messrohr mit einem Magnetsystem und mindestens ein Paar Hybridelektroden umfasst; wobei das Magnetsystem am Messrohr angeordnet ist, wobei die innere Mantelfläche des Messrohrs eine isolierenden, medienberührenden Werkstoff aufweist und wobei die Hybridelektroden in der isolierenden Oberfläche angeordnet sind; wobei eine Hybridelektrode mindestens einen Grundkörper, welcher einen ersten Werkstoff aufweist; und mindestens einen Elektrodenkopf aufweist, welcher mit dem Medium in Kontakt steht, welcher Elektrodenkopf mit dem Grundkörper verbunden ist und welcher Elektrodenkopf eine dem Grundkörper abgewandte Oberfläche aus einem zweiten Werkstoff aufweist, welcher Werkstoff metallisch ist; wobei die Hybridelektrode dadurch gekennzeichnet ist, dass der Elektrodenkopf zumindest im Randbereich stoffschlüssig mit dem Grundkörper verbunden ist.

In einer Ausgestaltung des Durchflussmessgeräts ist der Elektrodenkopf zumindest teilweise durch selektiven Materialauftrag hergestellt, wobei ein Metallpulver durch ein stoffschlüssig aufschmelzendes Verfahren zu einer metallischen Schicht umgeformt ist. Das stoffschlüssig aufschmelzende Verfahren kann beispielsweise auf Lasersintern oder Laserschmelzen basieren.

In einer Ausgestaltung des Durchflussmessgeräts ist das dem Metallpulver zugrundeliegende Material Platin oder bevorzugt Tantal oder insbesondere Titan.

In einer Ausgestaltung des Durchflussmessgeräts weist die Hybridelektrode mindestens einen Hohlraum auf, welcher insbesondere zwischen Grundkörper und Elektrodenkopf oder im Elektrodenkopf angeordnet ist. Auf diese Weise lässt sich der Verbrauch von hochpreisigen Materialien zur Herstellung der Hybridelektroden deutlich verringern.

In einer Ausgestaltung des Durchflussmessgeräts weist die Hybridelektrode mindestens eine Öffnung zu dem mindestens einen Hohlraum auf, wobei die Öffnung durch den isolierenden Werkstoff vom Medium getrennt ist. Bei durch selektiven Materialauftrag hergestellten Hybridelektroden wird der Hohlraum dadurch hergestellt, dass das Metallpulver im Bereich des Hohlraums pulverförmig belassen wird und nach Abschluss des materialauftragenden Verfahrens entfernt wird. Durch die mindestens eine Öffnung zum Hohlraum lässt sich beispielsweise durch Spülen das im Hohlraum vorhandene Metallpulver entfernen und für weitere Herstellungsprozesse nutzen.

In einer Ausgestaltung des Durchflussmessgeräts weist der Grundkörper zumindest abschnittsweise einen zylindrischen Schaft mit einem Außengewinde auf, wobei das Außengewinde sich über mindestens 10% und insbesondere mindestens 20% und höchstens 100% und insbesondere höchstens 70% der Schaftlänge erstreckt. Das Außengewinde ist dazu eingerichtet, die Hybridelektrode im Messrohr kraftschlüssig zu verankern.

In einer Ausgestaltung des Durchflussmessgeräts ist das Oberflächenverhältnis von Elektrodenkopf zu Grundkörper mindestens 3:1 und insbesondere mindestens 4:1 und höchstens 6:1 und insbesondere höchstens 5:1.

In einer Ausgestaltung des Durchflussmessgeräts weist der Elektrodenkopf an seiner zur Rohrwand des Durchflussmessgeräts gerichteten Seite eine axiale Anschlagfläche auf, welche Anschlagsfläche dadurch gekennzeichnet ist, dass der Elektrodenkopf an seiner Anschlagfläche eine Dichtlippe aufweist, welche Dichtlippe dazu dient, den Elektrodenkopf mit der Rohrwand dicht abzuschließen. Dadurch ist sichergestellt, dass korrosive Medien nicht mit dem Grundkörper in Kontakt geraten und die Funktionsfähigkeit der Hybridelektroden erhalten bleibt.

In einer Ausgestaltung des Durchflussmessgeräts folgt die Form der axialen Anschlagsfläche des Elektrodenkopfs dem Querschnitt der Rohrwandinnenseite. Insbesondere bei Durchflussmessgeräten mit kleinen Rohrwandinnendurchmessern ist der förmliche Unterschied zwischen einer ebenen axialen Anschlagfläche und der innere Mantelfläche des Messrohrs bedeutend, so dass der Elektrodenkopf gegen den isolierenden, medienberührenden Werkstoff gepresst werden muss, um eine ausreichende Dichtung zwischen Elektrodenkopf und innerer Mantelfläche zu gewährleisten. Durch Anpassung der Form der axialen Anschlagfläche an die Form der inneren Mantelfläche des Messrohrs kann die notwendige Anpresskraft und somit die Belastung des isolierenden Werkstoffs deutlich verringert werden.

In einer Ausgestaltung des Durchflussmessgeräts weist die zum Medium gerichtete Oberfläche des Elektrodenkopfs eine strömungsoptimierte Form auf. Insbesondere bei kleinen Messrohrinnendurchmessern können Messelektroden eine an ihnen vorbeifließende Strömung eines Mediums bedeutend beeinflussen. Die mit dem Medium in Kontakt stehende Oberfläche einer erfindungsgemäßen Hybridelektrode kann beispielsweise dadurch gekennzeichnet sein, dass sie einen minimalen Strömungswiderstand bietet. In laminaren Strömungen sorgen entstehende Verwirbelungen für einen erhöhten Strömungswiderstand. Eine erfindungsgemäße Hybridelektrode kann eine Oberfläche aufweisen, welche die Entstehung von Verwirbelungen in Strömungen im Bereich der Oberfläche verhindert und somit zu einem geringen Strömungswiderstand beiträgt. Die erfindungsgemäße Hybridelektrode kann beispielsweise auch dazu eingerichtet sein, in turbulenten Strömungen die Turbulenzdichte konstant zu halten.

In einer Ausgestaltung des Durchflussmessgeräts weist die metallische, mit dem Medium in Kontakt stehende Oberfläche eine Schichtdicke von mindestens 0.5 mm und insbesondere mindestens 0.8 mm und höchstens 5 mm und insbesondere höchstens 2 mm auf.

In einer Ausgestaltung des Durchflussmessgeräts weist die mit dem Medium in Kontakt stehende Oberfläche zu mindestens 30% und vorzugsweise zu mindestens 50% und insbesondere zu mindestens 70% eine konstante Schichtdicke auf.

Es wird also durch die vorliegende Erfindung ein magnetisch-induktives Durchflussmessgerät umfassend mindestens ein Paar von Hybridelektrode vorgeschlagen.

Im Folgenden wird die Erfindung anhand von in Zeichnungen dargestellten beispielhaften Ausführungsformen näher erläutert.

Es zeigt:
Fig. 1a: einen Querschnitt durch eine erfindungsgemäße Hybridelektrode;
Fig. 1b: eine Aufsicht auf eine axiale Anschlagfläche eines Elektrodenkopfs und eine vom Elektrodenkopf abgewandte Seite des Grundkörpers;
Fig. 1c: eine perspektivische Außenansicht der Hybridelektrode;

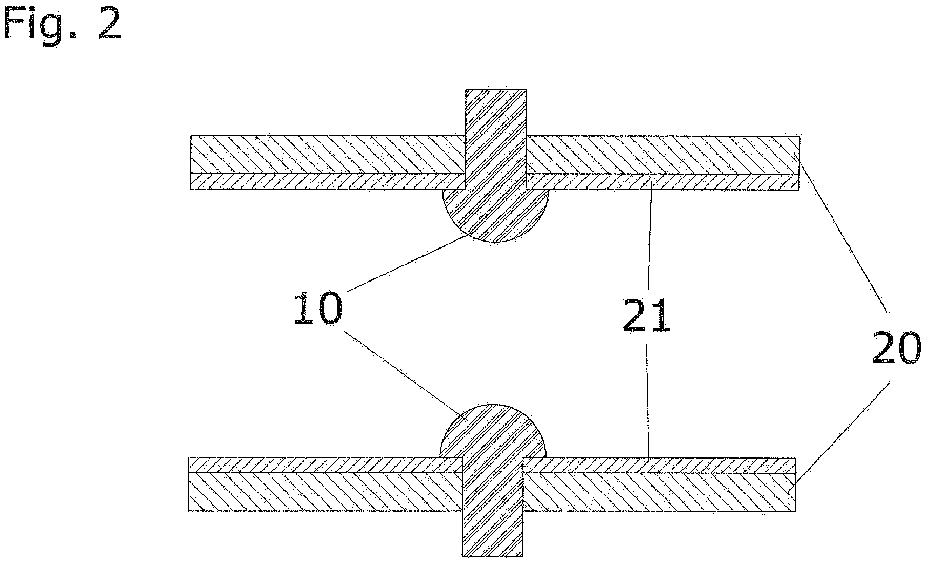

Fig. 2: den paarweisen Einsatz von Hybridelektroden 10 in einem Messrohr 20 mit einem die innere Mantelfläche des Messrohrs auskleidenden, isolierenden und medienberührenden Werkstoff 21.

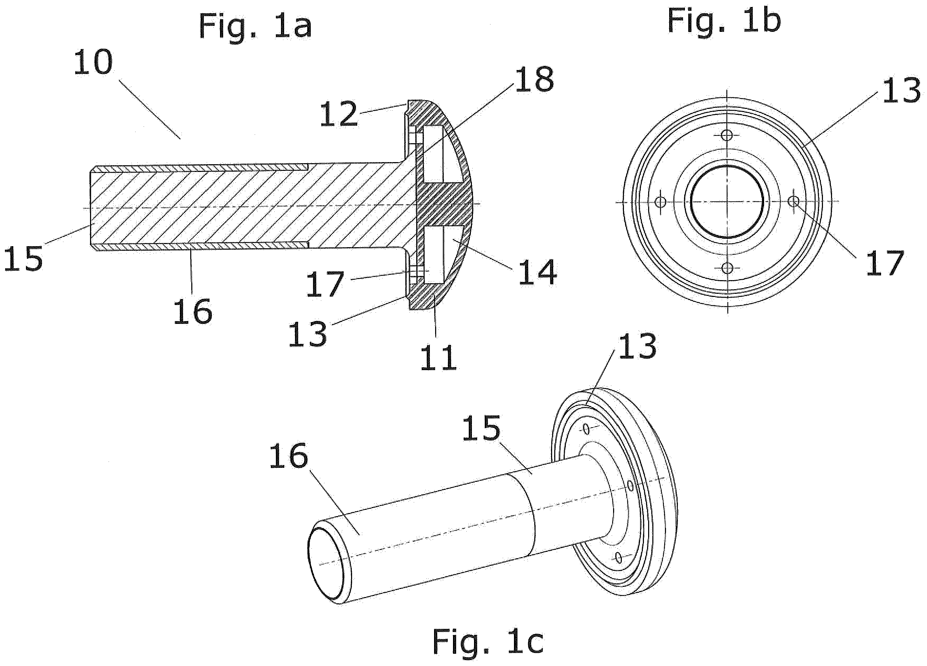

Der in Fig. 1a dargestellte Querschnitt der Hybridelektrode 10 zeigt einen Elektrodenkopf 11 und einen Grundkörper 15 mit einem zylindrischen Schaft, wobei der Elektrodenkopf 11 mit dem Grundkörper 15 an der Kontaktfläche 18 stoffschlüssig verbunden ist; wobei der Elektrodenkopf 11 einen Hohlraum 14, und eine Dichtlippe 13 auf der axialen Anschlagfläche 12 aufweist; wobei der Grundkörper ein Außengewinde 16 und mehrere Öffnungen 17 aufweist. Das während des selektiven Materialauftrags pulverförmig belassende Metallpulver im Bereich des Hohlraums 11 wird nach Abschluss des materialauftragenden Verfahrens durch die Öffnungen 17 zum Hohlraum 14 beispielsweise durch Spülen entfernt und kann für weitere Zwecke verwendet werden.

Die in Fig. 1b dargestellte Aufsicht auf die axiale Anschlagfläche 12 und die vom Elektrodenkopf 11 abgewandte Seite des Grundkörpers zeigt eine auf der axialen Anschlagfläche 12 verlaufende Dichtlippe 13 und vier Öffnungen 17.

Die in Fig. 1c dargestellte perspektivische Außenansicht der Hybrideiektrode vereint die in Fig. 1a und Fig. 1b gezeigten Merkmale der Hybridelektrode.

### Bezugszeichenliste

- 10: Hybridelektrode
- 11: Elektrodenkopf
- 12: axiale Anschlagfläche
- 13: Dichtlippe
- 14: Hohlraum
- 15: Grundkörper
- 16: Außengewinde
- 17: Öffnung
- 18: Kontaktfläche
- 20: Messrohr
- 21: medienberührender Werkstoff

## Patentansprüche

1. Magnetisch-induktives Durchflussmessgerät zur Messung der Durchflussgeschwindigkeit oder des Volumendurchflusses von Medien in einer Rohrleitung, umfassend:
Ein Messrohr (20) mit einem Magnetsystem, welches am Messrohr angeordnet ist,
wobei die innere Mantelfläche des Messrohrs einen isolierenden, medienberührenden Werkstoff (21) aufweist; und mindestens ein Paar Hybrideiektroden (10), wobei die Hybridelektroden im isolierenden Werkstoff (21) angeordnet sind,
wobei eine Hybridelektrode (10) mindestens einen Grundkörper (15), welcher einen ersten Werkstoff aufweist; und mindestens einen Elektrodenkopf (11) aufweist, welcher mit dem Medium in Kontakt steht, welcher Elektrodenkopf mit dem Grundkörper verbunden ist und welcher Elektrodenkopf eine dem Grundkörper abgewandte Oberfläche aus einem zweiten Werkstoff aufweist, welcher Werkstoff metallisch ist;
wobei der Elektrodenkopf zumindest in einem Randbereich stoffschlüssig mit dem Grundkörper verbunden ist,
**dadurch gekennzeichnet, dass** der Elektrodenkopf (11) zumindest teilweise durch selektiven Materialauftrag hergestellt ist, wobei ein Metallpulver durch ein stoffschlüssig aufschmelzendes Verfahren zu einer metallischen Schicht umgeformt ist,
wobei die Hybridelektrode (10) mindestens einen Hohlraum (14) aufweist, welcher insbesondere zwischen Grundkörper (15) und Elektrodenkopf (11) oder im Elektrodenkopf angeordnet ist,
wobei die Hybridelektrode (10) mindestens eine Öffnung (17) zu dem mindestens einen Hohlraum (14) eingerichtet zum Spülen des Hohlraums aufweist, wobei die Öffnung durch den isolierenden Werkstoff vom Medium getrennt ist.

2. Magnetisch-induktives Durchflussmessgerät nach Anspruch 1,
**dadurch gekennzeichnet, dass** das dem Metallpulver zugrundeliegende Material Platin oder bevorzugt Tantal oder insbesondere Titan ist.

3. Magnetisch-induktives Durchflussmessgerät nach Anspruch 2,
**dadurch gekennzeichnet, dass** der Grundkörper (15) zumindest abschnittsweise einen zylindrischen Schaft mit einem Außengewinde (16) aufweist, wobei das Außengewinde sich über mindestens 10% und höchstens 100% der Schaftlänge erstreckt.

4. Magnetisch-induktives Durchflussmessgerät nach einem der vorherigen Ansprüche,
**dadurch gekennzeichnet, dass** das ein Oberflächenverhältnis von Elektrodenkopf (11) zu Grundkörper (15) mindestens 3:1 und höchstens 6:1 ist.

5. Magnetisch-induktives Durchflussmessgerät nach einem der vorherigen Ansprüche,
wobei der Elektrodenkopf (11) an seiner zur Rohrwand des Durchflussmessgeräts gerichteten Seite eine axiale Anschlagfläche (12) aufweist,
**dadurch gekennzeichnet, dass** der Elektrodenkopf an seiner zur Rohrwand gerichteten axialen Anschlagfläche eine Dichtlippe (13) aufweist, welche Dichtlippe dazu dient, den Elektrodenkopf mit dem Werkstoff (21) dicht abzuschließen.

6. Magnetisch-induktives Durchflussmessgerät nach einem der vorherigen Ansprüche,
**dadurch gekennzeichnet, dass** die Form der axialen Anschlagsfläche (12) des Elektrodenkopfs (11) einem Querschnitt der Rohrwandinnenseite folgt.

7. Magnetisch-induktives Durchflussmessgerät nach einem der vorherigen Ansprüche,
**dadurch gekennzeichnet, dass** die metallische, mit dem Medium in Kontakt stehende Oberfläche eine Schichtdicke von mindestens 0.5 mm und höchstens 5 mm aufweist.

8. Magnetisch-induktives Durchflussmessgerät nach Anspruch 7,
**dadurch gekennzeichnet, dass** der mit dem Medium in Kontakt stehende Werkstoff (21) zu mindestens 30% eine konstante Schichtdicke aufweist.

## Claims

1. Electromagnetic flowmeter designed to measure the flow velocity or the volume flow of media in a pipe, said flowmeter comprising:
A measuring tube (20) with a magnet system, said system being arranged on the measuring tube,
wherein the interior lateral surface of the measuring tube features an insulating material (21), in contact with the medium; and at least a pair of hybrid electrodes (10), wherein the hybrid electrodes are arranged in the insulating material (21), wherein a hybrid electrode (10) has at least a meter body (15), said body having a first material, and at least an electrode head (11) which is in contact with the medium, said electrode head being connected to the meter body and featuring a surface facing away from the meter body, said surface having a second material, said material being metal;
wherein the electrode head is connected to the meter body via a positive substance bond, at least in a marginal area,
**characterized in that**
the electrode head (11) is made at least partially by the selective application of material, wherein a metal powder is transformed into a metal layer by means of a fusion procedure that bonds substances,
wherein the hybrid electrode (10) has at least a cavity (14), said cavity being arranged particularly between the meter body (15) and the electrode head (11) or in the electrode head,
wherein the hybrid electrode (10) has at least one opening (17) to the at least one cavity (14), said opening being provided to rinse the cavity, wherein the opening is separated from the medium by the insulating material.

2. Electromagnetic flowmeter as claimed in Claim 1,
**characterized in that** the base material used for the metal powder is platinum or preferably tantalum or particularly titanium.

3. Electromagnetic flowmeter as claimed in Claim 2,
**characterized in that** the meter body (15) has at least partially a cylindrical shaft with a male thread (16), wherein the male thread extends over at least 10 % and at most over 100 % of the shaft length.

4. Electromagnetic flowmeter as claimed in at least one of the previous claims,
**characterized in that** a surface ratio of the electrode head (11) to the meter body (15) is at least 3:1, at most 6:1.

5. Electromagnetic flowmeter as claimed in at least one of the previous claims,
wherein the electrode head (11) has an axial stop surface (12) on its side facing towards the tube wall of the flowmeter,
**characterized in that,**
on its axial stop surface facing towards the tube wall, the electrode head has a sealing lip (13), said sealing lip serving to tightly seal the electrode head with the material (21).

6. Electromagnetic flowmeter as claimed in one of the previous claims,
**characterized in that** the shape of the axial stop surface (12) of the electrode head (11) follows a cross-section of the inner side of the tube wall.

7. Electromagnetic flowmeter as claimed in one of the previous claims,
**characterized in that** the metal surface in contact with the medium has a layer thickness of at least 0.5 mm and at maximum 5 mm.

8. Electromagnetic flowmeter as claimed in Claim 7,
**characterized in that** the material (21) in contact with the medium has a constant layer thickness at a level of at least 30 %.

## Revendications

1. Débitmètre magnéto-inductif destiné à la mesure de la vitesse d'écoulement ou du débit volumique de produits s'écoulant dans une conduite, lequel débitmètre comprend :
Un tube de mesure (20) avec un système magnétique, lequel système est disposé sur le tube de mesure,
la surface latérale intérieure du tube de mesure étant constituée d'un matériau isolant 21), en contact avec le produit ; et au moins une paire d'électrodes hybrides (10), les électrodes hybrides étant disposées dans le matériau isolant (21),
une électrode hybride (10) comportant au moins un corps de base (15), lequel corps est constitué d'un premier matériau, et au moins une tête d'électrode (11) qui est en contact avec le produit, laquelle tête d'électrode est constituée, sur une surface située à l'opposé du corps de base, d'un deuxième matériau, lequel matériau est métallique ;
la tête d'électrode étant reliée, au moins dans une zone marginale, par liaison de matière avec le corps de base,
**caractérisé**
**en ce que** la tête d'électrode (11) est fabriquée au moins partiellement par une application sélective de matériau, une poudre métallique étant transformée en une couche métallique au moyen d'un procédé de fusion par liaison de matière, l'électrode hybride (10) comportant au moins une cavité (14), laquelle cavité est disposée notamment entre le corps de base (15) et la tête d'électrode (11) ou dans la tête d'électrode,
l'électrode hybride (10) présentant au moins une ouverture (17) par rapport à l'au moins une cavité (14), laquelle ouverture est prévue pour le rinçage de la cavité, l'ouverture étant séparée du produit par le matériau isolant.

2. Débitmètre magnéto-inductif selon la revendication 1,
**caractérisé en ce que** le matériau de base utilisé pour la poudre métallique est du platine ou de préférence du tantale ou particulièrement de préférence du titane.

3. Débitmètre magnéto-inductif selon la revendication 2,
**caractérisé en ce que** le corps de base (15) présente au moins partiellement une tige cylindrique avec un filetage extérieur (16), le filetage extérieur s'étendant sur au moins 10 % et au maximum sur 100 % de la longueur de tige.

4. Débitmètre magnéto-inductif selon l'une des revendications précédentes,
**caractérisé en ce qu'**un rapport des surfaces entre la tête d'électrode (11) et le corps de base (15) est d'au moins 3:1, au maximum de 6:1.

5. Débitmètre magnéto-inductif selon l'une des revendications précédentes,
pour lequel la tête d'électrode (11) présente une surface de butée axiale (12) sur sa face orientée vers la paroi de tube du débitmètre,
**caractérisé**
**en ce que** la tête d'électrode présente, sur sa surface de butée axiale tournée vers la paroi de tube, une lèvre d'étanchéité (13), laquelle lèvre sert à obturer de façon étanche la tête d'électrode avec le matériau (21).

6. Débitmètre magnéto-inductif selon l'une des revendications précédentes,
**caractérisé en ce que** la forme de la surface de butée axiale (12) de la tête d'électrode (11) épouse une section de la face intérieure de la paroi de tube.

7. Débitmètre magnéto-inductif selon l'une des revendications précédentes,
**caractérisé en ce que** la surface métallique en contact avec le produit présente une épaisseur de couche au minimum de 0,5 mm et au maximum de 5 mm.

8. Débitmètre magnéto-inductif selon la revendication 7,
**caractérisé en ce que** le matériau (21) en contact avec le produit présente une épaisseur de couche constante à hauteur d'au moins 30 %.
